# EUROPEAN PATENT APPLICATION

(11) **EP 2 269 441 A1**
(43) Date of publication of application: **05.01.2011**
(21) Application number: 09170274.6
(22) Date of filing: 15.09.2009
(51) Int. Cl.: A01G 3/025, B25G 1/04

(54) **Retractile-fixing structure for scissors**

(30) Priority: 03.07.2009 TW 98122543
(71) Applicant: Natura Innovation Ltd., Taipei 104 (TW)
(72) Inventor: Shan, Su-Hua, 104, Taipei (TW)
(74) Representative: Dossmann, Gérard

(57) **Abstract**

A retractile-fixing structure (40) for a scissors comprises an inner tube (42) having recessions (46) and an outer tube (44) allowing the inner tube (42) to slide thereinside and having a handle (48) and a fixing hole (52). One end of the retractile-fixing structure (40) has a connection member (70) connected with a blade. A switch (50) is arranged in the handle (48), and a rolling pin (64) is arranged inside the fixing hole (52). The rolling pin (64) rolls on the inner tube (42) or snap-fits to one recession (46). A pull rod (60) is arranged between the inner (42) and outer tubes (44) with one end connected to the switch (50) and another end engaging with the rolling pin (64). When the switch (50) opens, the pull rod (60) is separated from the rolling pin (64) and driven to compress a spring (54); the rolling pin (64) leaves the recession (46) and slides on the inner tube (42) simultaneously. When the switch (50) closes, the spring (54) makes the pull rod (60) engage with the rolling pin (64); the rolling pin (64) snap-fits to the recession; the inner tube (42) securely engages with the outer tubes (44).

## Description

The present invention relates to a retractile-fixing structure, particularly to a retractile-fixing structure installed in the handle of a scissors to convenience the user operating the scissors.

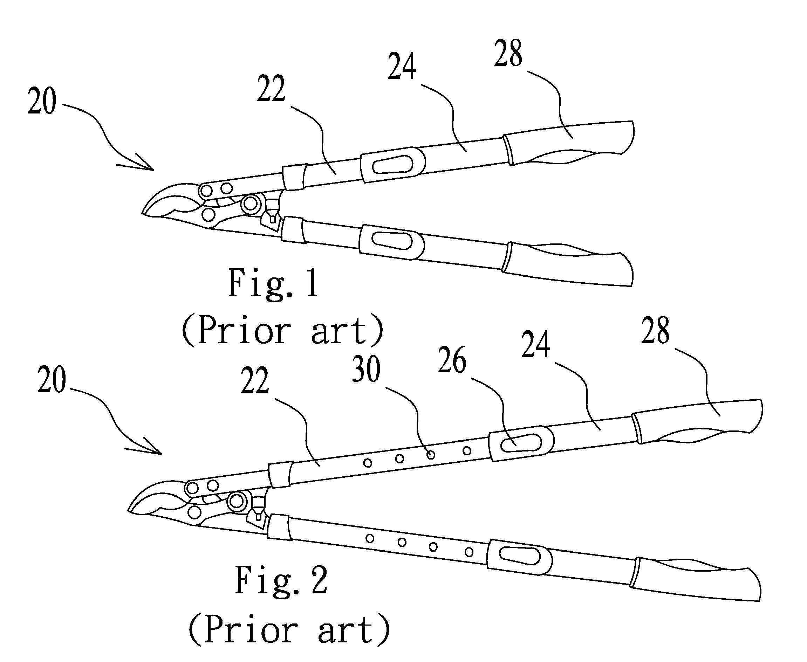

Refer to Fig.1 and Fig.2 diagrams schematically showing a conventional retractile-fixing structure for a scissors. The conventional retractile-fixing structure 20 comprises an inner tube 22 and an outer tube 24. A switch 26 is installed in the outer tube 22 and near the junction of the inner tube 22 and the outer tube 24. The inner tube 22 and outer tube 24 form the handle stick, and the lower end of the outer tube functions as the handlebar 28. The inner tube 22 has a plurality of holes 30 corresponding to the switch 26. The user uses his hands to open the switch 26 and operate the switch 26 to adjust the length of the handle stick. Then, the user moves his hands to the handlebars 28 to operate the scissors.

When the user uses the scissors equipped with the conventional retractile-fixing structure, he has to frequently move his hands between the switches 26 and the handlebars 28, which is indeed an inconvenience for the user.

Therefore, the present invention proposes a retractile-fixing structure for a scissors to solve the abovementioned problem.

The primary objective of the present invention is to provide a retractile-fixing structure for a scissors, which has a switch installed in the handle to convenience the user operating the scissors.

The present invention proposes a retractile-fixing structure for a scissors, which comprises an inner tube and an outer tube. One end of the retractile-fixing structure has a connection member connected with a blade. The inner tube has a plurality of recession on the surface thereof. The outer tube is hollow and allowed to the inner tube to slide thereinside. One end of the outer tube functions as a handle, and a switch is arranged in the handle. The other end of the outer tube has a fixing hole, and a rolling pin is accommodated in the fixing hole. The rolling pin can roll on the surface of the inner tube or snap-fits to one recession. A pull rod is arranged between the inner tube and the outer tube. One end of the pull rod contacts the switch, and the other end of the pull rod engages with the rolling pin. When the switch is opened from a close state, the switch drives the pull rod to compress a spring and separate from the rolling pin; the rolling pin leaves the recession and slide on the surface of the inner tube simultaneously. When the switch is closed from an open state, the resilience of the spring drives the pull rod to engage with the rolling pin again; the outer tube and the pull rod simultaneously drive the rolling pin to roll on the surface of the inner tube until the rolling pin snap-fits to the recession and the inner tube securely engages with the outer tube. Via the abovementioned structure, the user can conveniently operate the switch arranged in the handle to extend or retract the scissors. Therefore, the present invention can effectively solve the conventional problems.

Below, the embodiments are described in detail in cooperation with the attached drawings to make easily understood the objective, technical contents, characteristics and accomplishments of the present invention.
- Fig.1: is a diagram schematically showing a conventional retractile-fixing structure for a scissors;
- Fig.2: is another diagram schematically showing a conventional retractile-fixing structure for a scissors;
- Fig.3: is a perspective view schematically showing a retractile-fixing structure for a scissors according to the present invention;
- Fig.4: is an exploded view schematically showing a retractile-fixing structure for a scissors according to the present invention;
- Figs.5-7: are sectional views schematically showing partial structures of a retractile-fixing structure for a scissors in opening the switch according to the present invention; and
- Figs.8-10: are sectional views schematically showing partial structures of a retractile-fixing structure for a scissors in closing the switch according to the present invention.

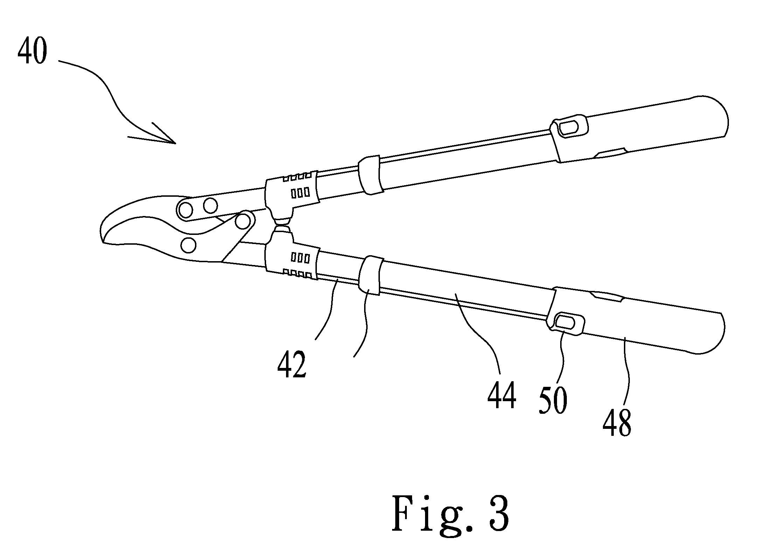

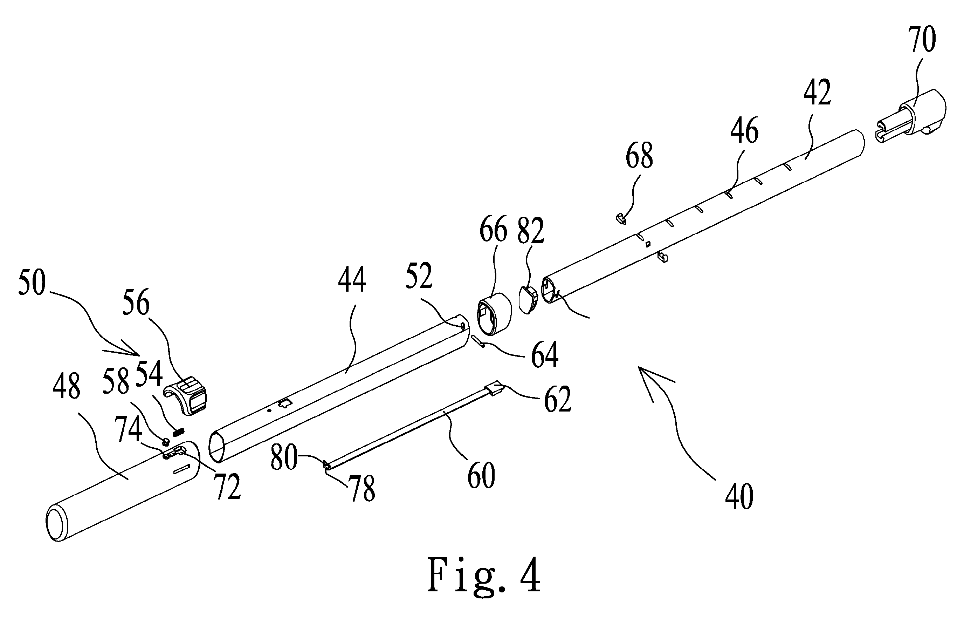

The present invention proposes a retractile-fixing structure for a scissors, which has a switch installed in the handle to convenience the user operating the scissors. Refer to Fig.3 and Fig.4 respectively a perspective view and an exploded view of a retractile-fixing structure according to the present invention. The retractile-fixing structure 40 of the present invention applies to various garden scissors. In this embodiment, a branch scissors is used to exemplify the garden scissors.

The retractile-fixing structure 40 is connected to a scissor blade. In Fig.3, the blades of a branch scissors respectively connect with two retractile-fixing structures. Each retractile-fixing structure 40 comprises an inner tube 42 and an outer tube 44. The inner tube 42 has a connection member 70 connecting with the blade. The inner tube 42 has a plurality of recessions 46 on the surface thereof, a first stopper 68 and a second stopper. The recessions 46 are arranged between the first stopper 68 and the second stopper. The recessions 46 are equidistantly or inequidistantly spaced.

The outer tube 44 is hollow and allows the inner tube to slide thereinside. One end of the outer tube 44 has a handle 48. The handle 48 has a switch 50. The other end of the outer tube 44 has a fixing hole 52 near the inner tube 42. The handle 48 has a first hole 72 and a second hole 74. The first hole 72 accommodates a protrusion, a block member, and a spring. The second hole 74 accommodates a pull bolt. The elements not designated by numerals will be further described below.

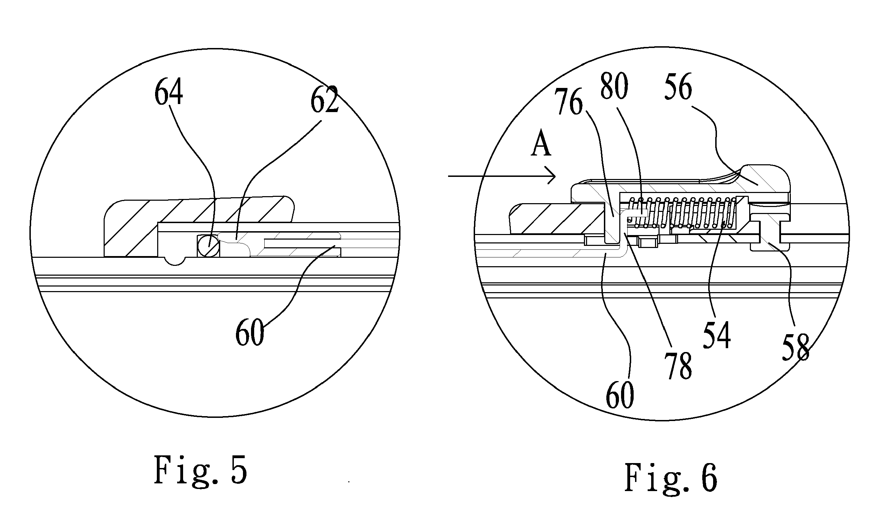

A pull rod 60 is arranged between the inner tube 42 and the outer tube 44. One end of the pull rod is bent into a block member 78. Refer to Fig.6. The block member 78 is arranged between a spring 54 and a protrusion 76. One side of the block member 78 presses against the protrusion 76 of a switch 56. The other side of the block member 78 presses against the spring 54. The other end of the block member 78 has a tongue rod 80 extending into the interior of the spring 54.

The other end of the pull rod 60 has a tongue plate 62 contacting the surface of rolling pin 64. The two ends of the rolling pin 64 are accommodated by the fixing hole 52 and slidable in the fixing hole 52. Via the fixing hole 52, the outer tube 44 drives the rolling pin 64 to roll on the surface of the inner tube 42.

The switch 50 includes a spring 54, a button 56, and a pull bolt 58. One end of the press button projects from the handle 48, and the other end extends to form the protrusion 76. The protrusion 76 is arranged between the pull rod 50 and the handle 48. One side of the protrusion 76 presses against the first hole 72, and the other side of the protrusion presses against the block member 78.

One end of the spring 54 presses against the pull rod 60, and the other end of the spring 54 presses against the first hole 72 of the handle 48. The pull bolt 58 is accommodated in the second hole 74. One end of the pull bolt 58 emerges from the outer tube 44. Therefore, the pull bolt 58 can move with the outer tube 44 synchronously. In this embodiment, the pull bolt 58 will not interfere with the inner tube 42 because the pull bolt 58 does not contact the inner tube 42. In other embodiments wherein the pull bolt 58 contacts the inner tube 42, a slide surface is formed on the pull bolt 58, whereby the pull bolt 58 can move with the outer tube 44 synchronously without interfering with the inner tube 42.

A slide sleeve 66 is arranged in the junction of the inner tube 42 and the outer tube 44 and wraps the pull rod 66 and the rolling pin 64. The slide sleeve 66 can slide on the inner tube 42 together with the pull rod 66 and the rolling pin 64. The slide sleeve 66 can slide in between the first stopper 68 or the second stopper. When sliding to the first stopper 68 or the second stopper, the slide sleeve 66 stops sliding.

The inner tube 42 has a bottom plug 82 at the end near the outer tube 44. One side of the bottom plug 82 is inserted into the inner tube 42. The other side of the bottom plug 82 coincides with the inner diameter of the outer tube 44.

A gap exists between the inner diameter of the outer tube 44 and the outer diameter of the inner tube 42. The bottom plug 82 is used to prevent the inner tube 42 from vibrating inside the outer tube 44.

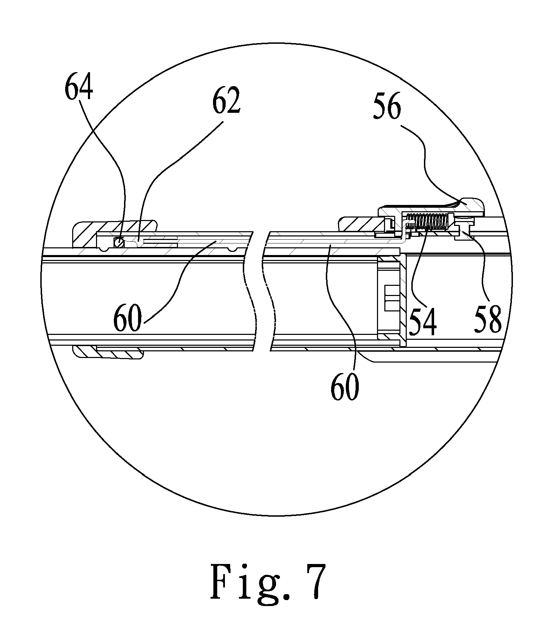

Refer to Figs.5-7. When the user applies a first force A to push the button 56 to open the switch 50 from a close state, the protrusion 76 of the button 56 of the switch 50 pushes one end of the pull rod 60 to compress the spring 54, and the pull rod 60 moves together with the spring 54. Thus, the tongue plate 62 is detached from the rolling pin 64. The fixing hole 52 of the outer tube 44 drives the rolling pin 64 to leave one recession 46 and slide together with the outer tube 44 on the surface of the inner tube 42.

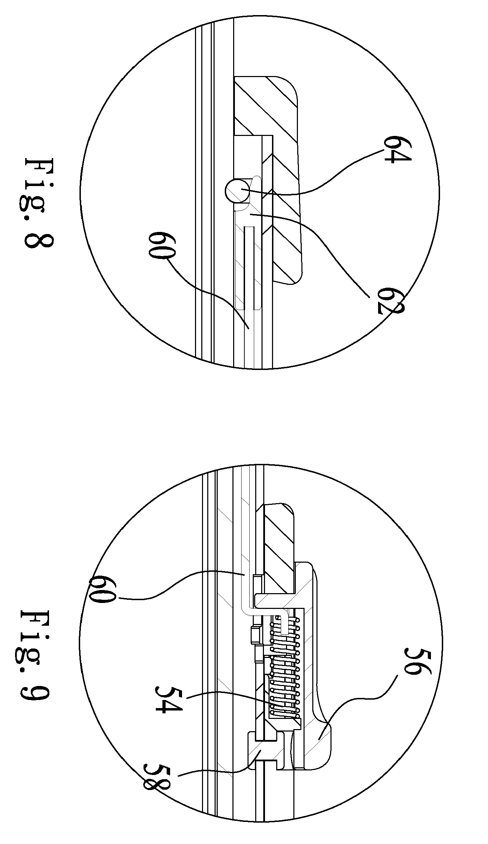

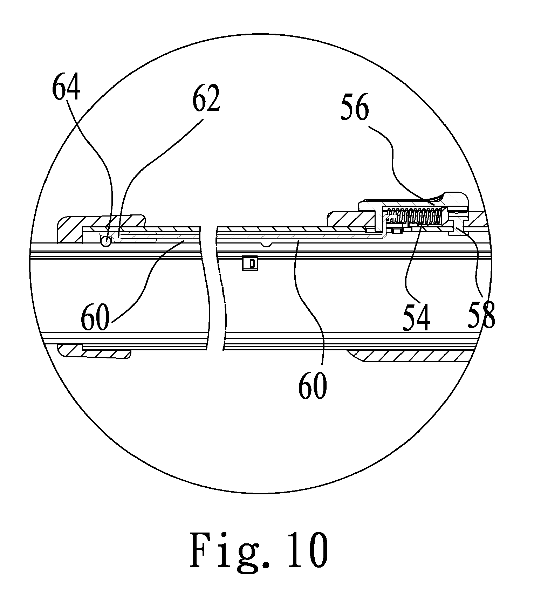

Refer to Figs.8-10. Then, the user releases the button 56 to enable the switch 50 to close from an open state. The resilience of the spring 54 restores the pull rod 60 and the protrusion 76 to the original position. Thus, the tongue plate 62 engages with the rolling pin 64 again. The fixing hole 52 of the outer tube 44 drives the rolling pin 64 to slide on the surface of the inner tube 42 until the rolling pin 64 snap-fits to another recession 46 and the outer tube 44 securely engages with the inner tube 42.

The embodiments described above are only to exemplify the present invention but not to limit the scope of the present invention. Any equivalent modification or variation according to the shapes, structures, characteristics and principles disclosed in the present invention is to be also included within the scope of the present invention.

## Claims

1. A retractile-fixing structure for a scissors comprising:
an inner tube having a plurality of recessions on a surface thereof, and having a connection member at one end thereof for connecting with a blade and;
an outer tube being hollow, allowing said inner tube to slide thereinside, having a handle at one end thereof, and having a fixing hole at another end thereof;
a switch arranged in said handle;
a rolling pin with two ends thereof slidably installed in said fixing hole, able to slide on said surface of aid inner tube or snap-fit to one said recession; and
a pull rod arranged between said outer tube and said inner tube, having one end thereof connected with said switch, and having another end thereof engaging with said rolling pin;
wherein when said switch is opened from a close state, said switch drives said pull rod to separate from said rolling pin; said rolling pin leaves one said recession and slides together with said outer tube on said surface of said inner tube, and
wherein when said switch is closed from an open state, said switch drives said pull rod to engage with said rolling pin; said pull rod and said outer tube drive said rolling to slide on said surface of said inner tube until said rolling pin snap-fits to another said recession 46 and said outer tube securely engages with said inner tube.

2. The retractile-fixing structure for a scissors according to claim 1, wherein said switch includes:
a spring with one end thereof pressing against said pull rod and another end thereof pressing against said handle;
a button with one end thereof emerging from said handle and another end thereof extending to form a protrusion; and
wherein said protrusion is arranged between said handle and said pull rod; and
wherein when a force is applied to said button, said protrusion of said button drives said pull rod to compress said spring and make one end of said spring have a displacement.

3. The retractile-fixing structure for a scissors according to claim 2, wherein one end of said pull rod is bent to form a block member; one side of said block member presses against said protrusion, and another side of said block member presses against said spring.

4. The retractile-fixing structure for a scissors according to claim 3, wherein said another end of said block member has a tongue rod inserted into interior of said spring.

5. The retractile-fixing structure for a scissors according to claim 2, wherein said handle has a first hole and a second hole; said first hole accommodates said protrusion, said block member and said spring; said second hole accommodates said a pull bolt; said block member is arranged between said spring and said protrusion; said another end of said spring presses against said first hole; two sides of said protrusion respectively press against said first hole and said block member.

6. The retractile-fixing structure for a scissors according to claim 1 further comprising a slide sleeve arranged in a junction of said inner tube and said outer tube, wrapping said pull rod and said rolling pin, and sliding on said inner tube together with said pull rod and said rolling pin.

7. The retractile-fixing structure for a scissors according to claim 6 further comprising a first stopper and a second stopper both arranged in said inner tube;
wherein said recessions are arranged between said first stopper and said second stopper,
wherein said slide sleeve slides in between said first stopper and said second stopper; and
wherein said slide sleeve stops sliding when sliding to said first stopper or said second stopper.

8. The retractile-fixing structure for a scissors according to claim 1, wherein said recessions are equidistantly spaced.

9. The retractile-fixing structure for a scissors according to claim 1, wherein said another end of said pull rod has a tongue plate engaging with said rolling pin.
